## Europäisches Patentamt
## European Patent Office
## Office européen des brevets

(19)

(11) Numéro de publication: **0 190 392**
**B1**

(12)

# FASCICULE DE BREVET EUROPEEN

(45) Date de publication du fascicule du brevet:
**28.12.88**

(51) Int. Cl.⁴: **G 09 F 3/03, A 01 K 11/00**

(21) Numéro de dépôt: **85108372.5**

(22) Date de dépôt: **05.07.85**

(54) **Marque pour le gibier.**

(30) Priorité: **06.02.85 CH 531/85**

(43) Date de publication de la demande:
**13.08.86 Bulletin 86/33**

(45) Mention de la délivrance du brevet:
**28.12.88 Bulletin 88/52**

(84) Etats contractants désignés:
**AT BE DE FR GB IT LU NL SE**

(56) Documents cités:
**DE-U- 1 680 184**
**FR-A- 2 412 258**
**FR-A- 2 442 583**
**US-A- 2 969 570**

(73) Titulaire: **BIWI S.A., Route de Boécourt,
CH-2855 Glovelier (CH)**

(72) Inventeur: **Bourquard, Yves, CH-2156 Boécourt (CH)**
Inventeur: **Bourquard, Pierre, CH-2856 Boécourt (CH)**

(74) Mandataire: **Finck, Dieter et al, Patentanwälte v. Füner,
Ebbinghaus, Finck Mariahilfplatz 2 & 3,
D-8000 München 90 (DE)**

ACTORUM AG

## Description

La présente invention concerne une marque d'identification pour le gibier ou le bétail. Elle concerne plus particulièrement une marque comportant un dispositif de fermeture inviolable et pouvant, sans outillage spécialisé, être aisément fixé sur l'animal.

De telles marques sont nécessaires aux chasseurs qui sont tenus d'identifier et de dater leurs prises, notamment à des fins statistiques de recensement et de contrôle.

Il existe de nombreuses réalisations de marques pour le gibier et celle décrite, par exemple, dans le modèle d'utilité DE-U-1 680 184 comprend essentiellement, un lien en métal ou en matière plastique, une membrane métallique, disposée à une extrémité du lien et comportant une ouverture déformable, et, à l'autre extrémité du lien, une tige terminée par un renflement délimitant une portée. L'ouverture est destinée à laisser passer la tige dont la portée, en prenant appui sur le bord de l'ouverture, empêche la séparation des deux extrémités du lien. Cette fermeture ne peut cependant être considérée comme étant inviolable car la tige est partiellement accessible de l'extérieur.

Dans une autre réalisation, divulguée par le brevet US-A-2 969 570, le lien comporte, à une extrémité, un élément mâle entouré d'un manchon et, à l'autre extrémité, un réceptacle entourant un élément femelle. Le lien une fois fermé, les éléments mâle et femelle restent cependant accessibles de l'extérieur à travers des fenêtres pratiquées dans les parois supportant ces éléments, ce qui fait que ce dispositif de fermeture, pas plus que le précédant, ne peut être considéré comme étant inviolable.

La même marque pourrait ainsi être utilisée abusivement a réitérées reprises. Ceci constitue naturellement un grave inconvénient auquel la présente invention se propose de remédier.

Pour atteindre cet objectif, la marque pour le gibier selon l'invention, comprenant un lien dont les extrémités sont munies, respectivement, de premiers et de seconds moyens complémentaires de fixation d'une des extrémités à l'autre, les premiers moyens comportant une tige et les seconds moyens comportant un corps dans lequel est enfermé un organe accessible de l'extérieur par un passage et traversable par la tige, est particulièrement remarquable en ce que la tige est entourée d'une coiffe dont la paroi intérieure correspond sensiblement à au moins une partie de la paroi extérieure du corps de sorte que, en position fermée de la marque, la coiffe recouvre par l'extérieur le corps en empêchant ainsi l'accès à ce corps.

Selon une forme de réalisation préférée, le lien comporte en outre des moyens pour indiquer la date de la prise du gibier.

Le dessin annexé représente, à titre d'exemple, une forme d'exécution possible de l'invention.

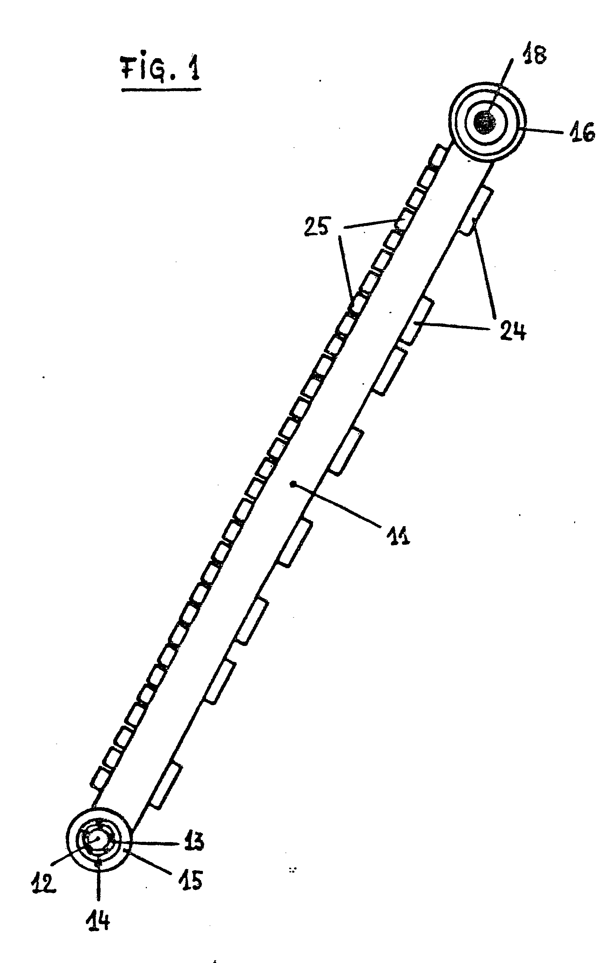

La fig. 1 représente une vue d'ensemble de la face interne de la marque; et

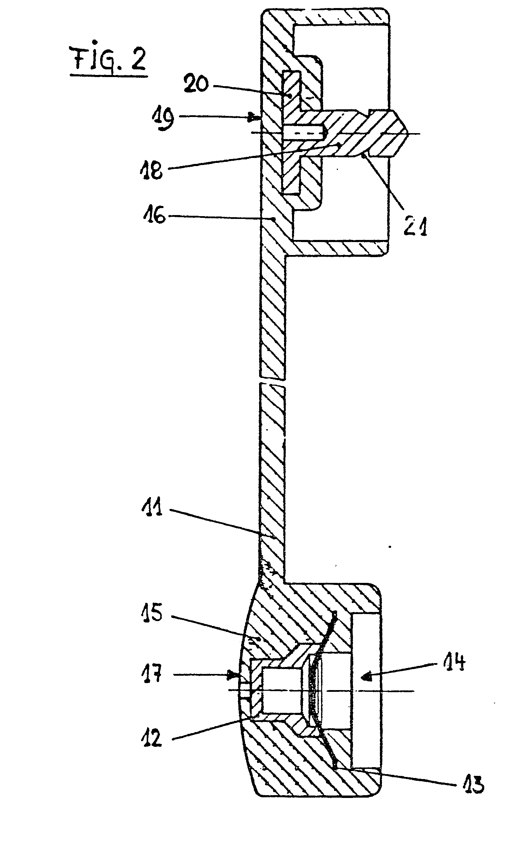

la fig. 2 est une vue en coupe transversale de chacune des extrémités de la marque.

La marque est constituée d'un lien 11 plat en matière plastique de l'ordre de 210 mm de longueur. A l'une de ses extrémités, le lien 11 porte – en tant que partie intégrante – une pièce 15 cylindrique munie d'une ouverture 14, dont le fond 17 est garni d'un insert métallique, soit un tube 12 fermé sur ledit fond 17 et surmonté d'une collerette 13 fendue. Cette pièce 15 constitue l'élément de fermeture femelle.

A son extrémité opposée, le lien 11 porte – en tant que partie intégrante – un organe 16 creux et de forme complémentaire à celle de la pièce 15, dont le fond 19 enrobe la base 20 d'un insert métallique, soit une tige 18 dont le pourtour porte une saignée 21. Cet organe 16 constitue l'élément de fermeture mâle.

La fermeture du lien 11 est réalisée lorsque l'organe 16 vient coiffer la pièce 15. Cette fermeture est définitive lorsque la tige 18 a pénétré dans le tube 12 dans lequel elle est maintenue par l'action de la collerette 13 dans la saignée 21 autour de la tige 18. Une bonne fermeture du lien 11 implique donc que le diamètre interne de l'organe 16 soit voisin du diamètre externe de la pièce 15, que la collerette 13 soit susceptible de déformation et que son diamètre interne soit, avant la déformation, plus petit que celui de la tige 18 et, après la déformation, voisin de celui de la tige 18 à la hauteur de la saignée 21.

Le tube 12 est en laiton tandis que la tige 18 est en acier.

La face externe du lien 11 peut porter des indications fixes telles que le lieu de chasse (canton département), l'année de chasse, la dénomination de l'animal, voire un numéro de série.

Des marques de couleurs différentes peuvent permettre d'identifier aisément les animaux.

Enfin le lien 11 porte, en tant que parties intégrantes, des moyens périphériques permettant d'indiquer la date du marquage, savoir d'une part autant de dents 24 qu'il y a de mois d'ouverture de chasse, chacune des dents 24 correspondant à l'un de ces mois et, d'autre part, 31 dents 25 correspondant aux jours d'un mois. De préférence, les dents 24 portent la mention des mois en question et les autres dents 25 sont numérotées de 1 à 31. Pour indiquer la date de marquage, il suffit de couper les dents 24, 25 du jour et du mois correspondant.

La marque selon l'invention est inviolable dans ce sens notamment qu'une fois fermée, les principaux éléments qui en assurent la fermeture (la collerette 13 et la tige 18) sont enfermés dans la sorte de capsule formée par la pièce 15 et l'organe 16.

La seule pression des doigts suffit à fermer la marque.

L'indication de la date de marquage est aisée qui ne nécessite qu'un couteau ou tout autre objet tranchant.

## Revendications

1. Marque pour le gibier, du type comprenant un lien (11) dont les extrémités sont munies, respectivement, de premiers et seconds moyens complémentaires de fixation l'une à l'autre desdites extrémités, lesdits premiers moyens comportant une tige (18) et lesdits seconds moyens comportant un corps (15) dans lequel est enfermé un organe (13) accessible de l'extérieur par un passage (14) et traversable par ladite tige (18), caractérisée en ce que la tige (18) est entourée d'une coiffe (16) dont la paroi intérieure correspond sensiblement à au moins une partie de la paroi extérieure du corps (15) de sorte que, en position fermée de la marque, la coiffe (16) recouvre par l'extérieur le corps (15) en empêchant ainsi l'accès audit corps.

2. Marque pour le gibier selon la revendication 1, caractérisée en ce que l'organe traversable (13) est une collerette déformable.

3. Marque pour le gibier selon la revendication 1 ou la revendication 2, caractérisée en ce que la tige (18) présente un rainure périphérique (21).

4. Marque pour le gibier selon la revendication 3, caractérisée en ce que la partie de fond du corps (15) comporte un tube (12) qui est surmonté par l'organe traversable (13) et présente une forme correspondant à celle de la partie d'extrémité libre de la tige au-delà de la rainure (21).

5. Marque pour le gibier selon la revendication 4, caractérisée en ce que les bords de la collerette (13) sont susceptibles, en position fermée de la marque, de s'engager dans ladite rainure (21).

6. Marque selon l'une quelconque des revendications précédentes, caractérisée en ce que le corps (15) et la coiffe (16) présentent des formes cylindriques correspondantes.

7. Marque pour le gibier selon l'une quelconque des revendications précédentes, caractérisée en ce que le lien (11) comporte des moyens (24, 25) d'indication de la date du marquage.

8. Marque pour le gibier selon la revendication 7, caractérisée en ce que lesdits moyens d'indication comportent des dents (24), correspondant aux mois, réparties le long d'un bord du lien (11) et des dents (25), correspondant aux jours, réparties le long de l'autre bord du lien (11).

**Patentansprüche**

1. Markierung für Wildtiere mit einem Band (11), dessen Enden mit ersten bzw. zweiten einander ergänzenden Einrichtungen für eine Befestigung des einen Endes an dem anderen Ende versehen sind, wobei die erste Einrichtung einen Stift (18) umfasst und die zweite Einrichtung einen Körper (15) umfasst, in dem ein von aussen durch einen Durchgang (14) zugängliches und von dem Stift (18) durchdringbares Element (13) eingeschlossen ist, dadurch gekennzeichnet, dass der Stift (18) von einer Kappe (16) umgeben ist, deren Innenwand im wesentlichen wenigstens einem Teil der Aussenwand des Körpers (15) entspricht, so dass die Kappe (16) in einer Schliessstellung der Markierung den Körper (15) von aussen abdeckt und so einen Zugang zu dem Körper verhindert.

2. Markierung für Wildtiere nach Anspruch 1, dadurch gekennzeichnet, dass das durchdringbare Element (13) ein verformbarer Flansch ist.

3. Markierung für Wildtiere nach Anspruch 1 oder 2, dadurch gekennzeichnet, dass der Stift (18) eine Umfangsnut (21) aufweist.

4. Markierung für Wildtiere nach Anspruch 3, dadurch gekennzeichnet, dass der Bodenteil des Körpers (15) eine Röhre (12) umfasst, die unterhalb des durchdringbaren Elements (13) angebracht ist und eine Form aufweist, die der des freien Endteils des Stiftes oberhalb der Nut (21) entspricht.

5. Markierung für Wildtiere nach Anspruch 4, dadurch gekennzeichnet, dass die Ränder des Flansches (13) dazu geeignet sind, in der Schliessstellung der Markierung in die Nut (21) einzugreifen.

6. Markierung nach einem der vorhergehenden Ansprüche, dadurch gekennzeichnet, dass der Körper (15) und die Kappe (16) einander entsprechende zylindrische Formen aufweisen.

7. Markierung für Wildtiere nach einem der vorhergehenden Ansprüche, dadurch gekennzeichnet, dass das Band (11) Einrichtungen (24, 25) zur Kennzeichnung des Markierungsdatums umfasst.

8. Markierung für Wildtiere nach Anspruch 7, dadurch gekennzeichnet, dass die Einrichtungen zur Kennzeichnung längs einer Kante des Bandes (11) verteilte, Monaten entsprechende Zähne (24) und längs der anderen Kante des Bandes (11) verteilte, Tagen entsprechende Zähne (25) umfasst.

**Claims**

1. Marker for game, of the type comprising a tie (11) the ends of which are provided respectively with first and second additional means of attachment to one and the other of the said ends, the said first means comprising a rod (18) and the said second means comprising a body (15) in which there is enclosed a member (13) accessible from the outside through a passage (14) and adapted to be traversed by the said rod (18), characterised in that the rod (18) is enclosed by a cover (16) of which the inner wall corresponds substantially to at least a part of the outer wall of the body (15) so that in the closed position of the marker, the cover (16) covers the outside of the body (15) so preventing access to the said body.

2. Marker for game according to Claim 1, characterised in that the traversable member (13) is a deformable collar.

3. Marker for game according to Claim 1 or Claim 2, characterised in that the rod (18) comprises a peripheral groove (21).

4. Marker for game according to Claim 3, characterised in that the bottom part of the body (15) comprises a tube (12) surmounted by the traversable member (13) and is shaped to match the shape of the part of the free end of the rod which extends beyond the groove (21).

5. Marker for game according to Claim 4, characterised in that the edges of the collar (13) are capable of engaging the said groove (21) when the marker is in the closed condition.

6. Marker according to any one of the preceding Claims, characterised in that the body (15) and the cover (16) are of corresponding cylindrical shapes.

7. Marker for game according to any one of the preceding Claims, characterised in that the tie (11) comprises means (24, 25) of indicating the date of marking.

8. Marker for game according to Claim 7, characterised in that the said indicating means comprise teeth (24) corresponding to the months, distributed along one edge of the tie (11) and teeth (25) corresponding to the days, distributed along the other edge of the tie (11).

FIG. 1

2/2

FIG. 2